# DEMANDE DE BREVET EUROPEEN

(11) **EP 2 369 839 A1**
(43) Date de publication de la demande: **28.09.2011**
(21) Numéro de dépôt: 11167326.5
(22) Date de dépôt: 12.10.2007
(51) Int. Cl.: H04N 7/16, H04N 7/24

(54) **Procédé de notification de changement de parametre d'emission et émetteur selon le procédé**

(30) Priorité: 12.10.2006 FR 0608977
(62) Demande divisionnaire de: 07020006.8
(71) Demandeur: Apple Inc., Cupertino, CA 95014 (US)
(72) Inventeur: Pecqueur, Rémi, 92800 Puteaux (FR)
(74) Mandataire: Lang, Johannes

(57) **Abrégé**

L'invention concerne un procédé de notification de changement de paramètre d'émission par un émetteur d'au moins un service numérique à destination de récepteurs dudit service numérique. Cette notification se base sur l'envoi concomitant d'une information relative à la nouvelle fréquence d'émission du service et d'une information sur le moment de l'émission des premières données sur la nouvelle fréquence exprimée relativement au moment de l'émission d'une structure de données contenant lesdites informations. Cette notification pourra prendre, dans un mode particulier de réalisation de l'invention, la forme d'une section contenant la nouvelle fréquence et le moment d'émission de la première salve de données du service sur cette nouvelle fréquence exprimé à partir du moment d'émission de ladite section.

## Description

### Domaine technique

L'invention concerne les réseaux de diffusion de services numériques à destination de terminaux mobiles et plus particulièrement le changement de fréquence d'émission d'au moins un service par un émetteur.

### Art antérieur

L'augmentation récente des demandes pour l'accès à la télévision numérique a amené la communauté scientifique à développer un système de diffusion hertzien de télévision numérique : le système DVB-T (Digital Vidéo Broadcasting Terrestrial : télévision numérique terrestre). Le système DVB-T, défini entre autres par les standards ETSI EN 300 744 Digital Vidéo Broadcasting (DVB) ; Framing structure, channel coding and modulation for digital terrestrial télévision. (DVB-T) , ETSI EN 300 468 Digital Vidéo Broadcasting (DVB) ; Spécification for Service Information (SI) in DVB systems. DVB-SI , est une technologie qui consiste à transmettre des flux de données numériques, telles que des données audio visuelles de type télévision qui peuvent être associées à des données numériques interactives du même type que celles qui sont transmises par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières d'accéder à ce type de flux de services. Cette adaptation a donné lieu au système normalisé dit DVB-H (Digital Vidéo Broadcast-Handheld) défini par le standard ETSI EN 302 304 : Digital Vidéo Broadcasting (DVB); Transmission System for Handheld Terminals (DVB-H) . Cette norme vise à permettre la diffusion de flux de services multimédias sur des terminaux mobiles qui, comme les téléphones mobiles, doivent répondre à des exigences spécifiques en terme de consommation de courant, de taille d'écran et de mobilité, Selon la norme DVB-H, les services transportés au sein d'un flux sont codés et multiplexés sur la base de la technologie MPEG-2 (Moving Picture Experts Group) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

L'un des moyens mis en oeuvre dans la norme DVB-H pour permettre au terminal d'économiser son énergie est la transmission des données par salves ( burst en anglais) dans un mode découpé temporellement ( time slice en anglais). Ce mode de transmission est détaillé dans le document ETSI EN 301 192 V1.4.1; Digital Video Broadcasting (DVB) ; DVB spécification for data broadcasting. Le mode de transmission par salves consiste à transmettre un flux élémentaire devant parvenir au récepteur avec un débit moyen donné sous la forme de salves de données envoyées. Le terminal récepteur voit dans ces salves un moyen pour créer de manière virtuelle un temps mort entre chaque salve.

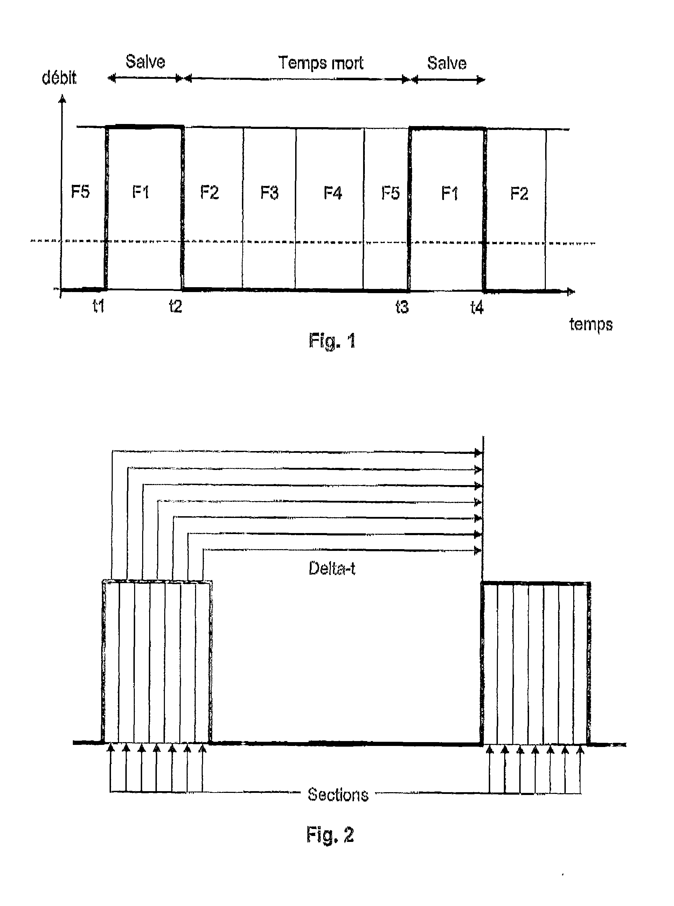

Le débit d'envoi de la salve et la durée du temps mort sont calculés de façon à ce que le débit moyen des données utiles envoyées obtenu soit le débit désiré. De cette façon, un récepteur intéressé par le service contenu dans ce flux élémentaire pourra interrompre ses moyens de réception pendant la durée du temps mort de façon à économiser son énergie. Ce mode est détaillé Fig. 1. On y voit un diagramme temporel de l'envoi de cinq flux élémentaires F1 à F5. La seconde dimension représente le débit en fonction du temps. Le trait en gras représente le débit en fonction du temps de l'envoi des données du premier flux F1. On voit que ces données sont reçues sous la forme de salves de données. Si l'on se place du point de vue du récepteur, une première salve est reçue entre le temps t1 et le temps t2. Aucune donnée du flux F1 n'est reçue entre t2 et t3, tandis qu'une seconde salve est reçue entre t3 et t4. Ce mode permet d'atteindre un débit moyen représenté par le trait en pointillé. Pendant le temps mort de la transmission du flux F1, il est possible de recevoir des salves correspondant à des flux élémentaires F2, F3, F4 et F5. Chaque flux va posséder des salves ayant leur propre durée. On voit donc que, si le récepteur n'a besoin que des données du flux F1, il peut couper ses moyens de réception entre t2 et t3 ce qui conduit à des économies d'énergie. De plus, le récepteur peut également mettre à profit le temps mort pour investiguer la réception sur d'autres fréquences du flux de transport pendant le temps mort et éventuellement décider d'un changement de fréquence pour une meilleure réception du service distribué sur un autre flux. Ce sera par exemple le cas pour un récepteur en mouvement qui devra passer d'une cellule de diffusion à une autre, mécanisme connu sous le nom de handover en anglais.

Un récepteur doit connaître la longueur du temps mort pour être en mesure de réveiller à temps ses moyens de réception de manière à pouvoir recevoir les données correspondant à la salve suivante. Le mécanisme utilisé pour informer le récepteur de la longueur du temps mort consiste en l'introduction de données, appelées données temps réel (real time parameters en anglais), dans le flux. Ce mécanisme est illustré Fig. 2. Sur cette figure, on voit deux salves successives d'un flux. Chaque salve est constituée d'un certain nombre de sections correspondant à des sections MPE (Multi Protocol Encapsulation en anglais), un protocole permettant l'encapsulation de divers autres protocoles. Ces sections MPE contiennent un en-tête et une partie données.

Une partie de cet en-tête est utilisée pour la transmission de ces données temps réel comprenant une information appelée delta-t indiquant la différence de temps entre le début de la section courante et le début de la prochaine salve. Le fait que cette information delta-t soit une indication du temps de début de la prochaine salve relative au début de la section courante contenant cette information et non une information temporelle absolue permet au récepteur de connaître le début de la prochaine salve indépendamment de toute latence introduite par la transmission. Ce mécanisme est par contre sensible au décalage temporel (jitter en anglais) introduit et qui doit rester inférieur à un seuil donné. Toutes les sections constituant la salve doivent donc contenir ces informations temps réel comprenant le delta-t indiquant le début de la prochaine salve. De cette façon, même dans un contexte de mauvaise réception, toute section correctement reçue permet au récepteur de connaître le début de la prochaine salve. Dans le cas contraire, le récepteur doit garder son module de réception allumé afin de récupérer au moins la première section puisqu'elle est non prédictive.

Nous avons vu que ce mécanisme de découpage temporel par salves permet au récepteur de pouvoir changer de fréquence sans nécessiter un second module de réception en offrant la possibilité d'utiliser le temps mort pour la recherche d'une éventuelle autre fréquence. Il est cependant des cas où le changement de fréquence devra intervenir à l'initiative, non pas du récepteur, mais de l'émetteur. Cela va se produire lorsque, par exemple, un émetteur constatera que du fait de son environnement fréquentiel, il doit changer sa fréquence d'émission pour éviter un conflit de fréquence. Dans ce cas, un flux, ou un sous ensemble de services du flux, émis sur une fréquence donnée va, à partir d'un moment donné, être émis sur une nouvelle fréquence. De façon à éviter la perte de réception du service, l'émetteur doit pouvoir notifier ce changement de fréquence au récepteur d'une manière qui permette à celui-ci de ne perdre aucune donnée. Le même problème se pose pour tout paramètre d'émission et pas seulement pour la fréquence.

### Exposé de l'invention

L'invention concerne un procédé de notification de changement de paramètre d'émission par un émetteur d'au moins un service numérique à destination de récepteurs dudit service numérique.

Cette notification se base sur l'envoi concomitant d'une information relative à la nouvelle fréquence d'émission du service et d'une information sur le moment de l'émission des premières données sur la nouvelle fréquence exprimée relativement au moment de l'émission d'une structure de données contenant lesdites informations. Cette notification pourra prendre, dans un mode particulier de réalisation de l'invention, la forme d'une section contenant la nouvelle fréquence et le moment d'émission de la première salve de données du service sur cette nouvelle fréquence exprimé à partir du moment d'émission de ladite section.

Par la connaissance de la nouvelle fréquence et du moment d'émission des premières données sur cette nouvelle fréquence, le récepteur peut programmer le changement de fréquence au moment opportun pour éviter la perte de données et effectuer le changement de fréquence demandé de manière transparente pour l'utilisateur du service.

L'invention concerne un procédé de notification du changement d'au moins un paramètre de l'émission d'au moins un service, par un appareil émetteur de services numériques radiodiffusés, à destination d'au moins un appareil de réception, ledit service ou lesdits services étant diffusé(s) au sein d'un flux de transport de données numériques émis dans un mode de transmission par découpage temporel par salves, ledit changement d'au moins un paramètre intervenant entre deux salves de transmission de données comportant les étapes suivantes :
une étape de transmission au sein du flux d'une information relative au moment de début de transmission des données dudit service ou desdits services sur la nouvelle fréquence,
une étape de transmission au sein du flux d'une information relative à la nouvelle valeur dudit ou desdits paramètres utilisée pour la transmission dudit service ou desdits services,
une étape de changement dudit ou desdits paramètres d'émission dudit service ou desdits services conformément à la nouvelle fréquence notifiée et au moment notifié.

Selon un mode particulier de réalisation de l'invention, ledit paramètre est la fréquence d'émission.

Selon un mode particulier de réalisation de l'invention, l'information relative au moment du début de transmission et l'information relative à la nouvelle valeur dudit ou desdits paramètres sont transmises au sein d'une même structure de données au sein du flux.

Selon un mode particulier de réalisation de l'invention, la diffusion ayant lieu selon la norme DVB, ladite structure de données est transmise au sein de la table d'information sur le réseau, appelée NIT.

Selon un mode particulier de réalisation de l'invention, ladite structure est transmise au sein de la dernière salve de données émise sur l'ancienne fréquence.

Selon un mode particulier de réalisation de l'invention, les salves étant constituées de sections, ladite structure est transmise sous la forme d'une section au sein de la salve.

Selon un mode particulier de réalisation de l'invention, ladite section contient en outre l'identificateur ou les identificateurs dudit service ou desdits services courants ainsi que le nouvel identificateur ou les nouveaux identificateurs dudit service ou desdits services lorsqu'ils sont émis sur la nouvelle fréquence.

L'invention concerne également un procédé de réception par un appareil de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un des paramètres de transmission dudit ou desdits services devant changer, ledit changement du ou des paramètres de transmission intervenant entre deux salves de transmission de données comportant les étapes suivantes :
une étape de réception au sein du flux d'une information relative au moment du début de transmission des données dudit service ou desdits services selon le nouveau paramètre de transmission,
une étape de réception au sein du flux d'une information relative à la nouvelle valeur dudit ou desdits paramètres utilisée pour la transmission dudit service ou desdits services,
une étape de changement de la valeur dudit ou desdits paramètres de transmission dudit service ou desdits services conformément à la nouvelle fréquence notifiée et au moment notifié.

L'invention concerne également un dispositif émetteur de services numériques radiodiffusés à destination d'au moins un appareil de réception, lesdits services étant diffusés au sein d'un flux de transport de données numériques émis dans un mode de transmission par découpage temporel par salves, ledit dispositif devant effectuer un changement d'au moins un paramètre de transmission d'au moins un service diffusé, ledit changement de paramètre intervenant entre deux salves de transmission de données comportant :
des moyens de notification dudit changement de paramètre de l'émission dudit service ou desdits services, comprenant les moyens suivants :
   un moyen de transmission au sein du flux d'une information relative au moment du début de transmission des données dudit service ou desdits services selon le ou les nouveaux paramètres,
   un moyen de transmission au sein du flux d'une information relative à la nouvelle valeur dudit ou desdits paramètres utilisée pour la transmission dudit service ou desdits services,
   un moyen de changer la valeur dudit ou desdits paramètres d'émission dudit service ou desdits services conformément à la nouvelle valeur notifiée et au moment notifié.

L'invention concerne également un dispositif de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un paramètre d'émission dudit service ou desdits services devant changer, ledit changement de paramètre intervenant entre deux salves de transmission de données comportant les moyens suivants :
un moyen de réception au sein du flux d'une information relative au moment du début de transmission des données dudit service ou desdits services sur le ou les nouveaux paramètres,
un moyen de réception au sein du flux d'une information relative à la nouvelle valeur dudit ou desdits paramètres utilisée pour la transmission dudit service ou desdits services,
un moyen de changer le ou les paramètres de réception dudit service ou desdits services conformément à la nouvelle valeur notifiée et au moment notifié.

L'invention concerne également une structure de données destinée à être transmise par un appareil émetteur de services numériques radiodiffusés, à destination d'au moins un appareil de réception, permettant la notification du changement d'au moins un paramètre de l'émission d'au moins un service, ledit service ou lesdits services étant diffusés au sein d'un flux de transport de données numériques émis dans un mode de transmission par découpage temporel par salves, ledit changement de paramètre intervenant entre deux salves de transmission de données comportant les étapes suivantes, caractérisé en ce que cette structure de données est émise au sein dudit flux de transport de données et comprend une information relative au moment du début de transmission des données dudit service ou desdits services selon le ou les nouveaux paramètres et une information relative à la nouvelle valeur du ou des paramètres utilisée pour la transmission dudit service ou desdits services.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente le schéma d'une émission de services par salves selon DVB-H.
La Fig. 2 représente un schéma plus détaillé de la structure de deux salves successives.
La Fig. 3 représente les sections typiques d'une salve.
La Fig. 4 représente la structure en section d'un exemple de réalisation de l'invention.
La Fig. 5 représente la table de changement de fréquence dans un exemple de réalisation de l'invention.
La Fig. 6 représente la structure des paramètres de temps réels dans DVB-H.

### Exposé détaillé de l'invention

Pour qu'un émetteur de services numériques puisse prendre l'initiative d'un changement de fréquence d'au moins un des services qu'il émet, il doit être en mesure d'annoncer ce changement aux récepteurs à l'écoute de ce service. En effet, ceux-ci doivent être en mesure de prendre connaissance du changement de fréquence à venir de l'émission du service et doivent, en outre, en connaître précisément le moment. De cette façon, ils peuvent être en mesure de recevoir sur la première fréquence toutes les données qui y sont émises, puis le moment venu, de changer de fréquence d'écoute pour recevoir toutes les données maintenant émises sur cette seconde fréquence. Ce changement interviendra pendant le temps mort entre deux salves de transmission de données dans un mode de transmission par découpage temporel.

Il faut donc avertir de manière fiable tous les terminaux à l'écoute du service que le changement va avoir lieu et indiquer le moment de ce changement de manière précise.

Il est d'une part nécessaire de mettre à jour les tables de signalisation du changement à venir. Il s'agit principalement, dans DVB, de la table NIT (Network Information Table en anglais). Cette table sert à décrire le réseau de diffusion et contient les informations fréquentielles de diffusion des flux de transport utilisés. Il est donc nécessaire de la mettre à jour pour indiquer la nouvelle fréquence utilisée lorsque celle-ci n'est pas déjà utilisée dans le réseau. Pour notifier aux récepteurs le changement de fréquence, il est alors possible d'introduire dans la NIT un nouveau descripteur qui va identifier le ou les services concernés, indiquer au moins la nouvelle fréquence utilisée et le moment du basculement vers la nouvelle fréquence. Pour les mêmes raisons de résistance aux latences pouvant être introduites lors de la transmission, il est proposé que cette indication du moment du basculement soit une indication relative à un autre événement du flux de transmission. Dans le cas du transport de ce nouveau descripteur au sein de la NIT, il est possible de prendre en référence de cette indication relative de temps, la fin de la transmission de la NIT. Il apparaîtra à l'homme du métier que tout autre évènement identifiable du flux peut servir de base de référence à cette indication temporelle relative, comme par exemple le début de la transmission de la NIT ou autre. Le descripteur va contenir donc, la différence de temps entre la fin de l'émission de la NIT et le début de l'émission de données du service concerné sur la nouvelle fréquence. Typiquement, dans le cas de DVB-H et d'une transmission de données par salve, il s'agira du début de la première salve de transmission de données du service sur la nouvelle fréquence. Ce descripteur contiendra donc au moins la nouvelle fréquence et l'indication du moment du basculement. Il pourra également contenir des informations complémentaires comme l'indication des services concernés ou toute autre information pertinente à propos de ce basculement.

Ce premier mécanisme de notification des récepteurs d'un basculement de fréquence possède quelques inconvénients. D'une part, un récepteur ne lit la NIT typiquement qu'une fois lors de sa découverte des services disponibles. Ensuite, dans un mode de fonctionnement où le récepteur est utilisé en réception et restitution d'un service donné, le récepteur est alors occupé à recevoir les salves de données concernant ce service et généralement coupe toute réception entre deux salves pour économiser son énergie. En l'absence de toute commande visant à accéder à la liste des services disponibles, il n'est pas dit que le récepteur lise la nouvelle NIT et accède donc à l'information sur le basculement. D'autre part, la fréquence d'émission de la NIT est typiquement de l'ordre de 30 secondes. Même si le changement de NIT est notifié au sein de la PMT (Program Map Table en anglais) qui est, elle, diffusée à une fréquence de l'ordre de 100 ms, le processus de notification du terminal par l'intermédiaire de la NIT est un processus lent qui ne permet pas à l'émetteur de programmer un changement de fréquence rapide. Il est bien sûr toujours possible à l'émetteur d'augmenter la fréquence de diffusion de la NIT lorsqu'un changement est programmé, mais cela restera un processus relativement lent.

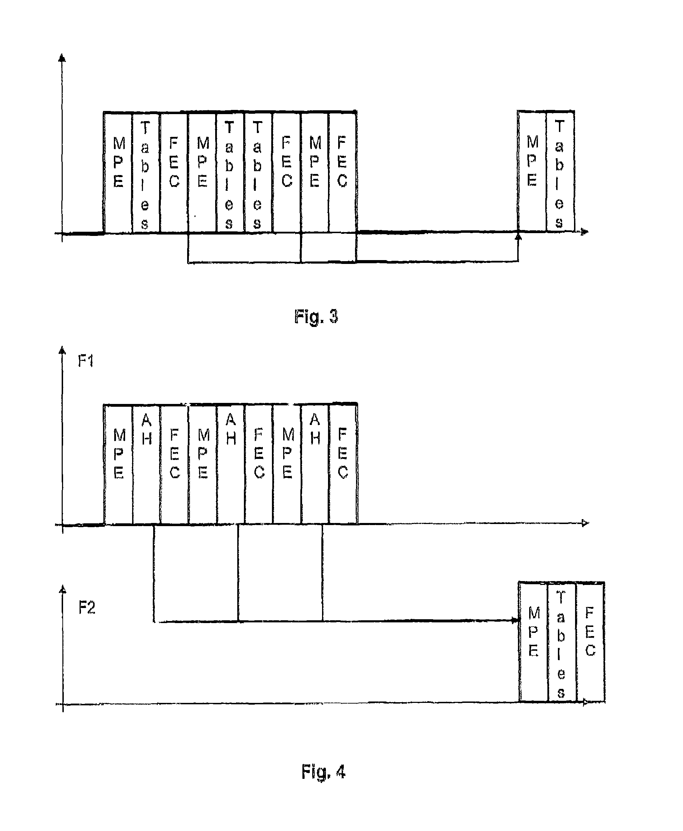

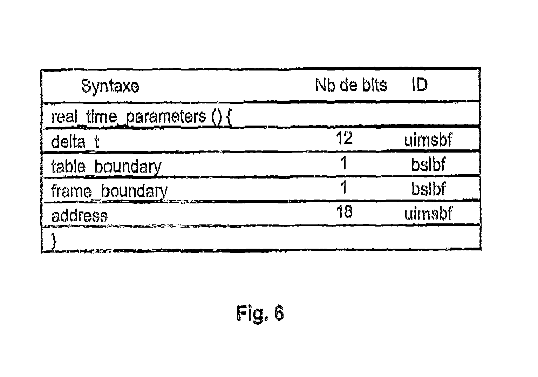

Pour pallier la relative lenteur de ce premier mode de notification d'un changement de fréquence de diffusion d'un service aux récepteurs, un second mode de notification est proposé. Dans ce nouveau mode de notification, le changement est notifié au niveau de la couche MAC ( Média Access Control en anglais). La Fig. 3 illustre la structure d'une salve représentative dans le cas d'une transmission de données utilisant le protocole MPE et la correction d'erreur FEC (Forward Error Correction en anglais). Dans ce cas, la salve est constituée par des sections contenant les données à transmettre, dites sections MPE, des sections contenant les données de redondance permettant la correction d'erreur, dites sections MPE-FEC et des sections contenant les tables de signalisation et marquées tables sur la figure. Les sections de signalisation vont venir s'intercaler de manière quelconque entre les sections MPE et les sections MPE-FEC. Les sections MPE et MPE-FEC contiennent les données temps réel et en particulier le delta-t indiquant le début de la salve suivante. La structure de ces données temps réel est indiquée Fig. 6. On voit que cette structure contient une information de différence de temps permettant d'indiquer le moment de la prochaine salve et appelée delta_t. La structure contient également un champ appelé table_boundary indiquant si la section dans laquelle est incluse la structure est une frontière de table. Le champ appelé frame_boundary indique, lui, si la section dans laquelle est incluse la structure est une frontière de trame, c'est-à-dire la frontière de la trame MPE-FEC courante. Le champ appelé address indique la position octet du premier octet de données utiles dans la trame MPE-FEC. Cette structure ne permet pas l'indication d'une nouvelle fréquence. Ce champ permet d'indiquer temporellement la future salve, mais ne permet donc pas l'indication de la nouvelle fréquence. Une solution consiste à remplacer ce descripteur par une version élargie de ce descripteur avec une structure étendue ayant un paramètre supplémentaire permettant d'indiquer la nouvelle fréquence. Par exemple, il peut contenir un champ hop_fréquency de 32 bits. Si ce champ est à 0, alors il n'y a pas de changement de fréquence. Si celui-ci est à une valeur autre que 0, il décrit un changement de fréquence au sein de la même cellule identifiée par son identificateur cell_id sur tout le flux. L'identificateur cell_id est référencé dans le descripteur cell_list_descriptor qui est contenu dans la NIT. Le champ PID_change_loop_length que nous verrons plus loin sera alors nul.

Il faut être en mesure de répondre de manière plus large aux changements de fréquences et à la réorganisation d'allocation des services identifiés par leur identifiant PID au sein d'un réseau à fréquence unique (SFN pour Single Frequency Network en anglais), d'un réseau dit multi SFN (plusieurs réseaux à fréquence unique indépendants) ou d'un réseau à multiples fréquences (MFN pour Multi-Frequency Network en anglais). En effet, il est impossible à ce jour de revoir de manière simple et sans coupure de services les fréquences et les services qui lui sont associés.

Le deuxième mode de réalisation répond à cette problématique et repose sur l'emploi d'une nouvelle table, appelée par exemple, table de changement de fréquence, soit Automatic_Handover en anglais ou encore AH. Cette table Automatic_Handover est donc insérée dans les salves de données du service appelé à changer de fréquence. Cette table permet d'indiquer, dans un premier temps, non seulement le moment de la future salve mais encore la fréquence sur laquelle elle va avoir lieu. Un exemple d'insertion de cette table dans la structure de la salve est illustré Fig. 4. On peut y voir que les tables AH sont insérées parmi les tables de signalisation entre les sections MPE et les sections MPE-FEC. Dans un autre mode de réalisation et si le système le nécessite, la table peut contenir une liste d'identificateurs PID de services sujets à un changement de fréquence dans le cas d'une salve ayant des services en parallèle.

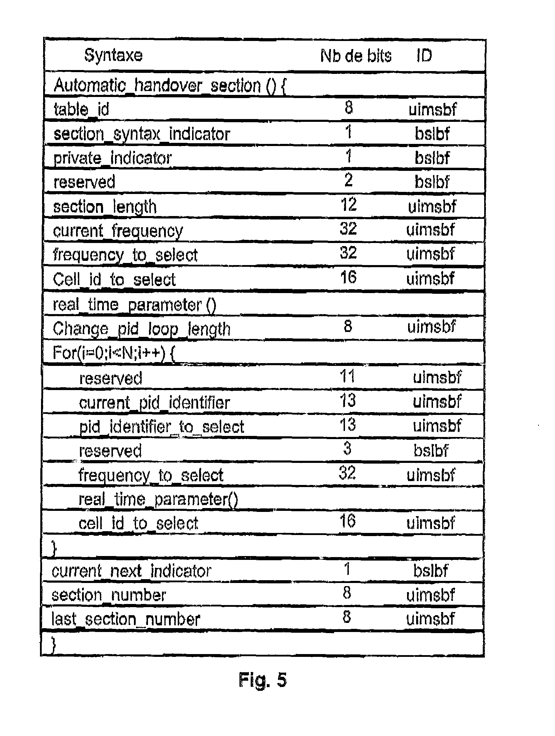

La structure de cette table dans l'exemple de réalisation de l'invention est donnée Fig. 5. Cette table possède, entre autres, un champ appelé current_frequency qui donne la fréquence courante sur laquelle est diffusé le service. Elle possède également un champ appelé frequency_to_select utilisé pour signaler la nouvelle fréquence utilisée pour la diffusion du service. On peut, par exemple, utiliser comme format de ce champ celui du descripteur utilisé pour signaler le flux. La fréquence peut être codée de manière à centrer celle-ci par rapport au descripteur terrestrial_delivery_system_descriptor. D'autres descripteurs comme ceux prévus pour les systèmes de diffusion par satellite ou par câble peuvent être utilisés. Un dernier champ cell_id_to_select indique le numéro de cellule au sein d'un même réseau identifié par son identificateur original_network_id. En effet, chaque cellule au sein d'un même réseau identifié par son original_network_id est unique.
Il est à noter que le passage d'un service d'un réseau à un autre n'est pas envisagé ici puisque nous ne faisons plus référence à la même entité (même diffuseur) et donc il est inutile de faire un tel référencement. S'il y a changement de fréquence, alors l'identificateur de flux de transport transport_stream_id reste constant.

Le champ Pid_loop_length indique le nombre d'octets qui suivent. Le champ current_pid_identiner est l'identificateur PIDs ayant un changement de service sur une autre fréquence.

De cette manière, un PID qui disparaît va voir son pid_identifier_to_select passer à oxiFFF. Au sein de la même fréquence ou sur une autre fréquence, un PID passera sur le groupe PID=0x0010 à oxiFFE.

De cette manière, le terminal recevant la salve courante contenant la table de changement de fréquence est à même de profiter du temps mort suivant la salve pour effectuer un changement de fréquence et se préparer à la réception de la salve suivante au moment indiqué sur la fréquence indiquée. Deux solutions sont possibles en ce qui concerne l'indication temporelle de paramètre temps réel présent dans les autres sections, c'est-à-dire les sections MPE et MPE-FEC. Une première solution consiste à y laisser l'indication temporelle du début de la salve suivante, bien que cette salve soit diffusée sur une autre fréquence. Une seconde solution consiste à la mettre à zéro en considérant que, sur la fréquence considérée, il n'y a pas de future salve. Cette deuxième solution peut paraître plus cohérente dans le cas où l'on autorise le basculement de fréquence d'un seul service au sein d'un flux de transport comportant plusieurs services et où les autres services continuent à être diffusés sur la fréquence courante. En effet, il faut envisager le cas où tout le flux est désormais émis sur une nouvelle fréquence, ce qui sera généralement le cas lorsque l'on cherchera à résoudre un conflit de fréquence et que la fréquence courante devra être libérée. Mais dans d'autres cas, il peut être intéressant d'effectuer un changement de fréquence sur la base d'un sous ensemble des services diffusés dans le flux. Dans ce cas, les deux fréquences continuent à être utilisées pour, par exemple, réorganiser les salves au sein d'une fréquence ou d'un groupe de fréquences formées par une cellule.

Il est à noter que cette table de changement de fréquence peut être généralisée à une table permettant d'indiquer d'autres changements dans la diffusion du service qu'un changement de fréquence. Par exemple, on peut utiliser une version élargie d'une telle table pour indiquer un changement d'identificateur PID du service diffusé. Un changement de PID n'est pas annoncé préalablement au changement aujourd'hui et cela peut entraîner une perte de service momentanée. Généralement, le nouvel identificateur PID est notifié via la table PMT une fois que le changement est effectif. L'utilisation de la table élargie permet de notifier le nouveau PID préalablement au changement ainsi que le moment du basculement, comme pour le changement de fréquence. Ainsi le récepteur est à même de planifier le changement et d'assurer la continuité de service. De cette manière, on peut notifier le changement d'un paramètre de diffusion du service et ce, quel que soit ce paramètre, Ia fréquence, le PID ou autre.

Les informations relatives aux différents types de modulation ne sont pas incluses dans cette table, puisque tous les types de modulation ne sont pas connus. Néanmoins, le système est conçu de manière à retrouver ces fréquences en comparant dans la liste des fréquences avec le cell_frequency_link_descriptor et le système de transport avec les delivery_system_descriptor (satellite/câble/terrestre) disponibles dans la NIT. Nous n'avons pas besoin des informations de l'identificateur de réseau network_id et d'identificateur de flux de transport transport_stream_id puisque si ceux-ci sont différents du flux courant alors nous avons un changement de plateforme IP.
Bien que l'invention puisse être définie dans les termes décrits dans les revendications ci-jointes, il convient de réaliser que la présente invention peut aussi, de manière alternative, être définie tel que décrit dans les modes de réalisation suivants :
Un procédé de notification du changement d'au moins un paramètre de l'émission d'au moins un service par un appareil émetteur de services numériques radiodiffusés, à destination d'au moins un appareil de réception, ledit service ou lesdits services étant diffusés au sein d'un flux de transport de données numériques émis dans un mode de transmission par découpage temporel par salves, ledit changement d'au moins un paramètre intervenant entre deux salves de transmission de données comportant les étapes suivantes :
- une étape de transmission au sein du flux d'une information relative au moment du début de transmission des données dudit service ou desdits services sur la nouvelle fréquence,
- une étape de transmission au sein du flux d'une information relative à la nouvelle valeur dudit ou desdits paramètres utilisée pour la transmission dudit service ou desdits services,
- une étape de changement dudit ou desdits paramètres d'émission dudit service ou desdits services conformément à la nouvelle fréquence notifiée et au moment notifié.
Selon un mode de réalisation du procédé, ledit paramètre est la fréquence d'émission.
Selon un autre mode de réalisation du procédé, l'information relative au moment du début de transmission et l'information relative à la nouvelle valeur dudit ou desdits paramètres sont transmises au sein d'une même structure de données au sein du flux.
Selon un autre mode de réalisation du procédé, la diffusion ayant lieu selon la norme DVB, ladite structure de données est transmise au sein de la table d'information sur le réseau, appelée NIT.
Selon un autre mode de réalisation du procédé, ladite structure est transmise au sein de la dernière salve de données émise sur l'ancienne fréquence.
Selon un autre mode de réalisation du procédé, les salves étant constituées de sections, ladite structure est transmise sous la forme d'une section au sein de la salve.
Selon un autre mode de réalisation du procédé, ladite section contient en outre l'identificateur ou les identificateurs dudit service ou desdits services courants ainsi que le nouvel identificateur ou les nouveaux identificateurs dudit service ou desdits services lorsqu'ils sont émis sur la nouvelle fréquence.
Un procédé de réception par un appareil de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un des paramètres de transmission dudit ou desdits services devant changer, ledit changement du ou des paramètres de transmission intervenant entre deux salves de transmission de données comportant les étapes suivantes :
- une étape de réception au sein du flux d'une information relative au moment du début de transmission des données dudit service ou desdits services selon le nouveau paramètre de transmission,
- une étape de réception au sein du flux d'une information relative à la nouvelle valeur dudit ou desdits paramètres utilisée pour la transmission dudit service ou desdits services,
- une étape de changement de la valeur dudit ou desdits paramètres de transmission dudit service ou desdits services conformément à la nouvelle fréquence notifiée et au moment notifié.
Un dispositif émetteur de services numériques radiodiffusés à destination d'au moins un appareil de réception, lesdits services étant diffusés au sein d'un flux de transport de données numériques émis dans un mode de transmission par découpage temporel par salves, ledit dispositif devant effectuer un changement d'au moins un paramètre de transmission d'au moins un service diffusé, ledit changement de paramètre intervenant entre deux salves de transmission de données comportant :
- des moyens de notification dudit changement de paramètre de l'émission dudit service ou desdits services, comprenant les moyens suivants :
- un moyen de transmission au sein du flux d'une information relative au moment du début de transmission des données dudit service ou desdits services selon le ou les nouveaux paramètres,
- un moyen de transmission au sein du flux d'une information relative à la nouvelle valeur dudit ou desdits paramètres utilisée pour la transmission dudit service ou desdits services,
- un moyen de changer la valeur dudit ou desdits paramètres d'émission dudit service ou desdits services conformément à la nouvelle valeur notifiée et au moment notifié.
Un dispositif de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un paramètre d'émission dudit service ou desdits services devant changer, ledit changement de paramètre intervenant entre deux salves de transmission de données comportant les moyens suivants :
- un moyen de réception au sein du flux d'une information relative au moment du début de transmission des données dudit service ou desdits services sur le ou les nouveaux paramètres,
- un moyen de réception au sein du flux d'une information relative à la nouvelle valeur dudit ou desdits paramètres utilisée pour la transmission dudit service ou desdits services,
- un moyen de changer le ou les paramètres de réception dudit service ou desdits services conformément à la nouvelle valeur notifiée et au moment notifié.
Une structure de données destinée à être transmise par un appareil émetteur de services numériques radiodiffusés, à destination d'au moins un appareil de réception, permettant la notification du changement d'au moins un paramètre de l'émission d'au moins un service, ledit service ou lesdits services étant diffusés au sein d'un flux de transport de données numériques émis dans un mode de transmission par découpage temporel par salves, ledit changement de paramètre intervenant entre deux salves de transmission de données comportant les étapes suivantes, caractérisé en ce que cette structure de données est émise au sein dudit flux de transport de données et comprend une information relative au moment du début de transmission des données dudit service ou desdits services selon le ou les nouveaux paramètres et une information relative à la nouvelle valeur du ou des paramètres utilisée pour la transmission dudit service ou desdits services.

## Revendications

1. Procédé de notification du changement d'au moins un paramètre de l'émission d'au moins un service par un appareil émetteur de services numériques radiodiffusés, à destination d'au moins un appareil de réception, ledit au moins un service étant diffusé au sein d'un flux de transport de données numériques émis dans un mode de transmission par découpage temporel par salves, ledit changement d'au moins un paramètre intervenant entre deux salves de transmission de données comportant les étapes suivantes :
- une étape de transmission au sein du flux d'une information relative au moment du début de transmission des données dudit au moins un service selon le nouveau au moins un paramètre d'émission,
- une étape de transmission au sein du flux d'une information relative à la nouvelle valeur dudit au moins un paramètre utilisée pour la transmission dudit au moins un service,
- une étape de changement dudit au moins un paramètre d'émission dudit au moins un service conformément à la nouvelle valeur notifiée et au moment notifié.

2. Procédé selon la revendication 1 où ledit paramètre est la fréquence d'émission.

3. Procédé selon la revendication 1 où l'information relative au moment du début de transmission et l'information relative à la nouvelle valeur dudit au moins un paramètre sont transmises au sein d'une même structure de données au sein du flux.

4. Procédé selon la revendication 3 où la diffusion ayant lieu selon la norme DVB, ladite structure de données est transmise au sein de la table d'information sur le réseau, appelée NIT.

5. Procédé selon la revendication 3 où ladite structure est transmise au sein de la dernière salve de données émise sur l'ancienne fréquence.

6. Procédé selon la revendication 5 où les salves étant constituées de sections, ladite structure est transmise sous la forme d'une section au sein de la salve,

7. Procédé selon la revendication 6 où ladite section contient en outre l'identificateur ou les identificateurs dudit service ou desdits services courants ainsi que le nouvel identificateur ou les nouveaux identificateurs dudit au moins un service lorsqu'ils sont émis sur la nouvelle fréquence.

8. Procédé de réception par un appareil de réception d'au moins un service, émis par un appareil émetteur de services numériques radiodiffusés, ledit au moins un service étant diffusé au sein d'un flux de transport de données numériques émis dans un mode de transmission par découpage temporel par salves, au moins un des paramètres de transmission dudit au moins un service devant changer, ledit changement du au moins un paramètre de transmission intervenant entre deux salves de transmission de données comportant les étapes suivantes :
- une étape de réception au sein du flux d'une information relative au moment du début de transmission des données dudit au moins un service selon le nouveau au moins un paramètre de transmission,
- une étape de réception au sein du flux d'une information relative à la nouvelle valeur dudit au moins un paramètre utilisée pour la transmission dudit au moins un service,
- une étape de changement de la valeur dudit au moins un paramètre de transmission dudit au moins un service conformément à la nouvelle valeur notifiée et au moment notifié.

9. Dispositif émetteur de services numériques radiodiffusés à destination d'au moins un appareil de réception, lesdits services étant diffusés au sein d'un flux de transport de données numériques émis dans un mode de transmission par découpage temporel par salves, ledit dispositif devant effectuer un changement d'au moins un paramètre de transmission d'au moins un service diffusé, ledit changement de paramètre intervenant entre deux salves de transmission de données comportant :
- des moyens de notification dudit changement de paramètre de l'émission dudit au moins un service, comprenant les moyens suivants :
- un moyen de transmission au sein du flux d'une information relative au moment du début de transmission des données dudit au moins un service selon le nouveau au moins un paramètre de transmission,
- un moyen de transmission au sein du flux d'une information relative à la nouvelle valeur dudit au moins un paramètre utilisée pour la transmission dudit au moins un service,
- un moyen de changer la valeur dudit au moins un paramètre d'émission dudit au moins un service conformément à la nouvelle valeur notifiée et au moment notifié.

10. Dispositif de réception d'au moins un service, émis par un appareil émetteur de services numériques radiodiffusés, ledit au moins un service étant diffusé au sein d'un flux de transport de données numériques émis dans un mode de transmission par découpage temporel par salves, au moins un paramètre d'émission dudit au moins un service devant changer, ledit changement de paramètre intervenant entre deux salves de transmission de données comportant les moyens suivants :
- un moyen de réception au sein du flux d'une information relative au moment du début de transmission des données dudit au moins un service sur le nouveau au moins un paramètre,
- un moyen de réception au sein du flux d'une information relative à la nouvelle valeur dudit au moins un paramètre utilisée pour la transmission dudit au moins un service,
- un moyen de changer le au moins un paramètre de réception dudit au moins un service conformément à la nouvelle valeur notifiée et au moment notifié.

11. Structure de données destinée à être transmise par un appareil émetteur de services numériques radiodiffusés, à destination d'au moins un appareil de réception, permettant la notification du changement d'au moins un paramètre de l'émission d'au moins un service, ledit au moins un service étant diffusé au sein d'un flux de transport de données numériques émis dans un mode de transmission par découpage temporel par salves, ledit changement de paramètre intervenant entre deux salves de transmission de données, **caractérisé en ce que** cette structure de données est destinée à être émise au sein dudit flux de transport de données et comprend une information relative au moment du début de transmission des données dudit au moins un service selon le nouveau au moins un paramètre et une information relative à la nouvelle valeur du au moins un paramètre utilisée pour la transmission dudit au moins un service.
